# EUROPEAN PATENT APPLICATION

(11) **EP 2 361 512 A1**
(43) Date of publication of application: **31.08.2011**
(21) Application number: 11000983.4
(22) Date of filing: 08.02.2011
(51) Int. Cl.: A23L 1/217

(54) **Method for the preparation of pre-cooked potato fries and for the prefrying and final frying and fried fries obtainable according to this method**

(30) Priority: 25.02.2010 BE 201000125
(71) Applicant: Van Remoortel, Naamloze, 9130 Verrebroek (BE)
(72) Inventor: Van Remoortel, Jozef, 9130 Verrebroek (BE)
(74) Representative: Donné, Eddy

(57) **Abstract**

Method (1) for preparing pre-cooked potato chips, for reducing the acrylamide content in fried potato chips, characterised in that it comprises the following steps: the blanching (4) of raw pre-cut potato chips at a temperature of 80 to 90°C, and for a sufficiently long time between 5 and 20 minutes, which is chosen such that the guaiacol discolouring time in a peroxidase test (9) on the potato chip is longer than 30 seconds, and preferably longer than 30 seconds; the cooling (7) to a core temperature of between 0°C and 4°C; the packaging (8)in bags in an inert or low-oxygen atmosphere.

## Description

The present invention relates to a method for preparing pre-cooked potato chips.

More specifically, the invention is intended to reduce or exclude the acrylamide content in fried potato chips.

It is known that acrylamide occurs in many prepared starch-containing foodstuffs. Acrylamide was discovered in food by chance in April 2002 by Swedish scientists when they found the substance in starch-containing foodstuffs, such as potato crisps, fried potato chips and heated bread.

In February 2009, a study was announced in Canada into the question of whether this acrylamide constitutes a risk to human health and whether regulatory measures are required, further to reports that acrylamide is carcinogenic in rats at high doses.

The mechanism by which acrylamide is formed is uncertain, but many believe that it is a by-product of the Maillard reaction between asparagine and reducing sugars, such as fructose and glucose, at high temperatures above 180°C.

It is known that acrylamide is formed in fried potato chips and that the quantity of acrylamide increases the longer the food is heated.

A disadvantage of traditional fried potato chips is that they are prepared at a high temperature of 180°C or more for a desired result, which more easily gives rise to the formation of acrylamide, which can occur from the reaction of reducing sugars with the amino acid asparagine.

Another disadvantage of traditional potato chips is that they are prepared from cut potatoes that have not been pre-cooked and thus contain more water that is released during the second frying, after which the fat absorbed by the fried chip increases.

Another disadvantage of the traditional preparation based on non-pre-cooked potatoes is that the reducing sugars are still there and asparagine is also present, which together can give rise to the formation of acrylamide.

The purpose of the present invention is to provide a solution to the aforementioned disadvantages and other disadvantages.

To this end the invention concerns a method for preparing pre-cooked potato chips that comprises the following steps: the blanching of raw pre-cut potato chips at a temperature of 80-90°C, and preferably 70-90°C, and for a sufficiently long time between 5 and 20 minutes, and preferably between 5 and 30 minutes, which is chosen such that the guaiacol discolouring time in a peroxidase test on the potato chip is longer than 30 seconds, and preferably longer than 15 seconds; the cooling to a core temperature of between 0°C and 4°C; the packaging in bags in an inert or low-oxygen atmosphere.

An advantage of this method for processing companies is that the pre-cooked potato chips, received as a fresh, not prefried product, can be kept cool in the open packaging for more than 24 hours without discolouring and without being oxidation-sensitive.

Another advantage of this method for processing companies is that there is no water discharge in the packaging and that the potato chips can be kept for longer as a result of a better microbial quality.

An additional advantage of this method is that the blanching stage leaches out reducing sugars and lowers the water content, which not only enables the potato chips to be first-fried and second-fried at lower temperatures, resulting in time and energy savings, but also counteracts the formation of acrylamide by decreasing the reducing sugars needed for acrylamide formation.

This was confirmed experimentally by the inventor by measuring the acrylamide content in second-fried potato chips according to the Standard Operating Procedure (SOP) ANAL-16, in which an acrylamide content of less than 150 ppb was found.

Optionally a dipping stage can be introduced in the method at a temperature below 60°C in which asparaginase is added, and this preferably at a concentration of 625 to 4200 ASNU per litre, where an ASNU (asparaginase unit) is defined as the quantity of enzyme needed to produce 1.0 mol of ammonia per minute at pH 7.0 and 37°C.

An advantage of the action of asparaginase is that the asparagine content is lowered as a result, such that the conversion of asparagine to acrylamide is reduced and the acrylamide content after the second frying of the potato chips is greatly reduced (less than 50 ppb), or is even not detectable (less than 12.5 ppb) with the analytical method used.

The first frying of potato chips prepared from chips that have been pre-cooked according to the method described above is done at a temperature of 135°C for 5.5 minutes, followed by a cooling stage of 5 minutes at room temperature and the second frying is done at a maximum temperature of 157°C for 2.5 to 3 minutes.

These lower temperatures for the first frying and second frying of potato chips are possible because they contain less water after this pre-cooking.

An advantage of these shorter frying times at lower temperatures is that less fat penetrates the chips. This, together with a lowered sugar content due to sugars leaching out during the blanching stage, leads to a finished potato chip with up to 20% lower calorific value.

Another advantage of these shorter frying times at a lower temperature is that the formation of acrylamide is prevented or reduced, which occurs at higher temperatures (180°C) by the Maillard reaction between reducing sugars and the amino acid asparagine.

An additional advantage of the shorter frying times at lower temperatures is the energy saving that results from this.

With the intention of better showing the characteristics of the invention, a couple of preferred embodiments are described hereinafter by way of an example, without any limiting nature, of the method according to the invention, with reference to the accompanying drawings, wherein:
figure 1 shows the different steps of the method for preparing pre-cooked potato chips according to the invention.
figure 2 presents a readiness test that can be used in the method according to the invention.
figure 3 shows the successive stages of the method for the first frying and second frying of pre-cooked potato chips according to the invention.
figure 4 shows the conversion of asparagine into acrylamide.

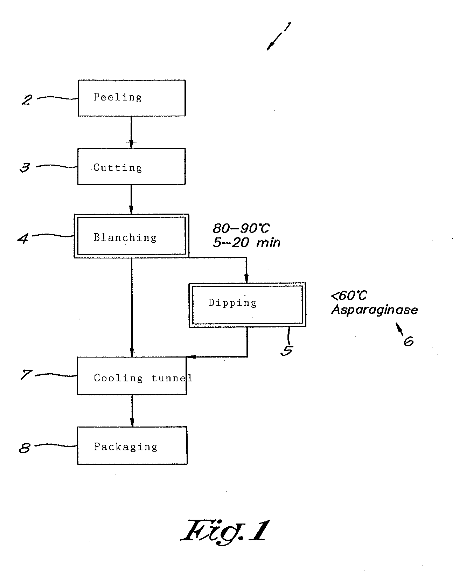

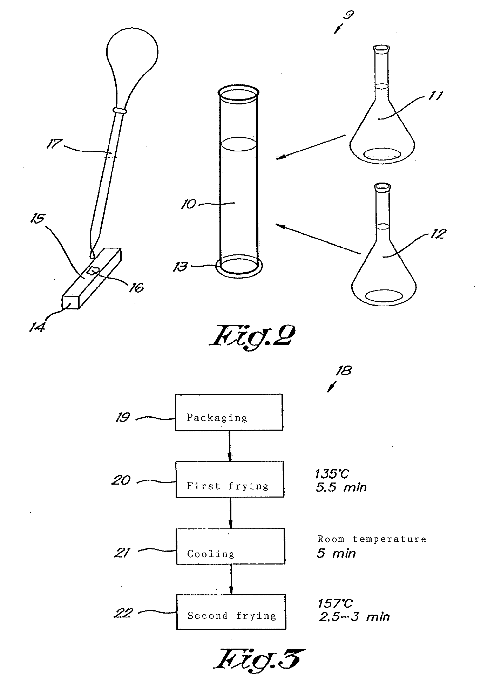

Figure 1 describes the different steps of a method 1 for preparing pre-cooked potato chips in which the steps consist of peeling 2 the fresh potatoes, cutting 3 them into chips, blanching 4 them according to the invention into pre-cooked chips at a temperature of 80°C to 90°C, and preferably from 70°C to 90°C, for 5 to 20 minutes, and preferably for 5 to 30 minutes whereby the duration is determined on the basis of the readiness test presented in figure 2, the optional dipping 5 in a water bath, to which a dose of asparaginase 6 is added according to the invention; the cooling 7 in a cooling tunnel to a temperature of between 0°C and 4°C; the packaging 8 of the pre-cooked potato chips into a packaging, preferably in a low-oxygen or inert atmosphere.

The readiness test described above is to determine the duration between 5 and 30 minutes that the pre-cooked chips have to be blanched for.

This test can of course be done for every cooking process, but in practice it comes down to this test being done beforehand for chips of a certain thickness of a certain type of potato, and from a certain growing season. Once these tests are known for a specific combination of these conditions, the process can be routinely repeated without having to do the test each time.

An example of the aforementioned readiness test is shown schematically in figure 2, and more specifically it is a peroxidase readiness test 9.

The readiness is measured in this test by determining the enzymatic activity of the peroxidase in the chips. This is done by using a solution 10 consisting of guaiacol, ethanol and hydrogen peroxide.

This solution 10 is prepared by diluting 0.5 ml guaiacol and 5 ml ethanol with demineralised water up to the graduation mark in a first 50 ml volumetric flask 11. In a second 50 ml volumetric flask 12, 2.95 ml hydrogen peroxide (30%) is diluted with demineralised water up to the graduation mark. Both flasks are combined in a receptacle 13 and stored at 4°C in the dark.

To conduct the peroxidase test, the potato chips 14 are cut in half lengthwise and a number of droplets 16 of the mixture are added on the cut surfaces 15 with a pipette 17. The solution can only start to discolour red after 30 seconds, and preferably only after 15 seconds, if the pre-cooking duration is sufficient to obtain a good pre-cooking.

The method as described above enables pre-cooked chips to be obtained that can be distributed in this form to the end user or to catering businesses, and which have the appearance of a fresh product, i.e. a raw pre-cut chip.

The subsequent frying method of the pre-cooked chip is also important to obtain a healthy chip with as little acrylamide as possible, in any case less than 150 ppb, and with a lower calorific value than traditionally fried chips.

This frying method 18 is schematically shown in figure 3 whereby the pre-packaged chips are taken out of their packaging 19, whereby these pre-cooked chips are fried in two stages in a fat, such as oil or similar, i.e. the first frying 20 of the chips at a temperature of 135°C for 5.5 minutes followed by a cooling stage 21 of 5 minutes at room temperature, and by the second frying 22 of the chips at a maximum temperature of 157°C for 2.5 to 3 minutes.

These temperatures are lower than with traditional potato chips and enable the acrylamide content after the second frying 16 to be reduced or eliminated, provided that the pre-cooking 1 is done according to this invention.

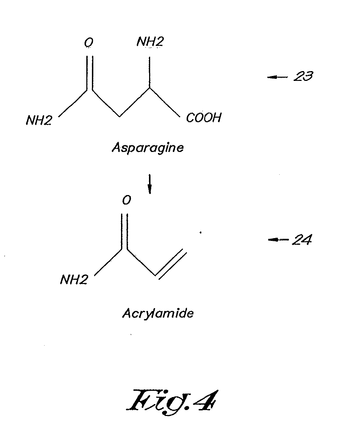

Figure 4 presents the conversion of the amino acid asparagine 23 to acrylamide 24. This conversion occurs at a higher temperature (180°C) during the second frying of the potato chips in which asparagine 17 is present by nature. The reaction is fostered by reducing sugars such as glucose and fructose. The reducing sugars are decreased by the blanching stage 4 in the method for pre-cooking 1 by leaching out, and optionally the asparagine content is reduced during dipping 5 by adding the enzyme asparaginase 6 at a working temperature below 60°C.

The methods according to the invention described above have proven that they yield a healthier chip in practice that is characterised in that its acrylamide content 24 is less than 150 ppb and its calorific value is less than that of traditional chips.

This does not detract from the fact that there can be departures to the set temperatures and frying times, which can also yield results that are just as good, or even other types of methods.

It is thus important to emphasise that pre-cooked chips and fried chips with the healthy characteristics that are obtainable as a fresh product according to the aforementioned methods are in themselves new, and consequently justify a claim in the form of a product obtainable from a method to protect the new pre-cooked or fried potato chip.

The present invention is by no means limited to the embodiments described as an example and shown in the drawings, but a method according to the invention can be realised in all kinds of variants, without departing from the scope of the invention.

## Claims

1. Method (1) for preparing pre-cooked potato chips, for reducing the acrylamide content in fried potato chips, **characterised in that** it comprises the following steps: the blanching (4) of raw pre-cut potato chips at a temperature of 80 to 90°C, and for a sufficiently long time between 5 and 20 minutes, which is chosen such that the guaiacol discolouring time in a peroxidase test (9) on the potato chip is longer than 30 seconds; the cooling (7) to a core temperature of between 0°C and 4°C; the packaging (8)in bags in an inert or low-oxygen atmosphere.

2. Method according to claim 1, **characterised in that** the blanching is done at a temperature of 70 to 90°C for a duration of 5 to 30 minutes, and whereby the duration is chosen such that the discolouring time of guaiacol in a peroxidase test (9) on the potato chip is longer than 15 seconds.

3. Method for preparing pre-cooked potato chips according to claim 1 or 2, **characterised in that** after pre-cooking there is also a dipping stage (5) in water at a temperature of less than 60°C in which asparaginase (6) has been added.

4. Method according to claim 3, **characterised in that** the asparaginase (6) is added at a concentration of 625 to 4200 ASNU per litre of dipping fluid, whereby the temperature of the dipping fluid is less than 60°C.

5. Method for the first frying and second frying of the pre-cooked chips obtained according to the method of one of the foregoing claims, **characterised in that** the first frying is done at a temperature of 135°C for 5.5 minutes, followed by a cooling stage at room temperature for 5 minutes, followed by the second frying at a maximum temperature of 157°C for 2.5 to 3 minutes.

6. Fried potato chips obtainable from the application of the method of claim 4, **characterised in that** they have an acrylamide content that is less than 150 ppb.

7. Fried potato chips obtainable from the application of the method of claim 4, **characterised in that** they have an acrylamide content that is less than 50 ppb.
